Europäisches Patentamt

European Patent Office

Office européen des brevets

(19)

(11) Numéro de publication: **0 253 696 B1**

(12) **FASCICULE DE BREVET EUROPEEN**

(45) Date de publication du fascicule du brevet:
27.09.89

(51) Int. Cl.⁴: **B60S 1/04**

(21) Numéro de dépôt. 87401394.9

(22) Date de dépôt: **19.06.87**

(54) Installation d'essuie-glace pour véhicule automobile.

(30) Priorité: **23.06.86 FR 8609029**

(43) Date de publication de la demande:
**20.01.88 Bulletin 88/3**

(45) Mention de la délivrance du brevet:
**27.09.89 Bulletin 89/39**

(84) Etats contractants désignés:
**DE ES GB IT**

(56) Documents cités:
**EP-A- 0 120 261**
**WO-A-86/05151**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Leger, André, 56, rue Louise Michel, F-78500 Sartrouville(FR)**

(74) Mandataire: **Polus, Camille et al, c/o Cabinet Lavoix 2, Place d'Estienne d'Orves, F-75441 Paris Cedex 09(FR)**

ACTORUM AG

## Description

L'invention concerne une installation d'essuie-glace pour véhicule automobile équipée de moyens pour soulever les raclettes des balais d'essuie-glace, en position de garage.

Les essuie-glaces pour véhicule automobile comportent de manière habituelle un bras monté articulé sur la carrosserie du véhicule, un balai fixé sur le bras et muni d'une raclette souple destinée à balayer la surface du pare-brise du véhicule et un moyen de motorisation du bras commandé, à la demande de l'utilisateur, de façon à faire effectuer un balayage du pare-brise par la raclette avec un certain angle de rotation du bras.

Le bras et le balai peuvent être mis dans une position d'arrêt, appelée position de garage, par un déplacement angulaire supplémentaire, à partir de la position d'arrêt normale.

Il est souhaitable que dans cette position de garage, la raclette souple du balai de l'essuie-glace ne se trouve pas en appui contre la surface du pare-brise, avec une pression correspondant à la pression de service exercée par la monture de l'essuie-glace. Cette pression exercée sur la raclette pendant des périodes qui peuvent être très longues risque en effet d'entraîner une déformation de la raclette.

On a donc imaginé d'utiliser des dispositifs permettant de soulever la raclette au-dessus de la surface du pare-brise, lorsque l'essuie-glace est mis en position de garage.

On a par exemple proposé dans le brevet français FR-A 2.051.007 de fixer une came sur la carrosserie du véhicule, de façon à soulever le bras de l'essuie-glace en fin de course. Toutefois, une telle came est inesthétique car elle doit être d'une hauteur su périeure à la distance séparant le bras de la carrosserie du véhicule. Si l'on diminue cette distance, l'efficacité des balais s'en trouve réduite.

On connaît également des installations d'essuie-glace dans lesquelles les bras ou les balais sont munis de déflecteurs d'air dont le rôle est d'éviter que le balai d'essuie-glace ne subisse, en service, une force de soulèvement l'éloignant de la surface du pare-brise, en particulier lorsque le véhicule roule à grande vitesse. Cette force de soulèvement diminue en effet la pression de la raclette sur la surface du pare-brise et entraîne ainsi une diminution de l'efficacité de l'essuie-glace.

On a proposé des déflecteurs d'air comportant une section profilée dont une partie se déplace avec le balai de l'essuie-glace à une faible distance de la surface du pare-brise.

On n'a cependant jamais pensé à utiliser de tels déflecteurs d'air, lorsqu'ils sont fixés sur le balai de l'essuie-glace, pour soulever la raclette dans la position de garage du balai d'essuie-glace.

Le but de l'invention est donc de proposer une installation d'essuie-glace pour véhicule automobile comportant de manière connue un bras monté articulé sur la carrosserie du véhicule, un balai fixé sur le bras et muni d'une raclette souple destinée à balayer la surface du pare-brise du véhicule et un moyen de motorisation du bras commandé de façon à faire effectuer un balayage du pare-brise à la raclette, avec un certain angle de rotation du bras et à déplacer le balai au-delà d'une des positions extrêmes de balayage, pour le mettre en position de garage, le balai comportant de plus un dispositif déflecteur d'air dans son prolongement latéral, au moins sur un côté et pré sentant une section profilée dont une partie au moins est proche de la surface du pare-brise, le but de l'invention étant que cette installation permette de soulever la raclette de l'essuie-glace en position de garage, grâce à un élément supplémentaire très simple de réalisation et très peu saillant par rapport à la carrosserie et au pare-brise du véhicule.

Dans ce but, l'installation d'essuie-glace selon l'invention comporte en outre au moins une butée fixée sur le bord du pare-brise, légèrement saillante par rapport à sa surface et dans une position correspondant à la position de garage du déflecteur d'air, de façon à soulever le balai au-dessus de la surface du pare-brise, juste avant son arrêt en position de garage, par coopération du déflecteur d'air et de la butée. Des variantes de réalisation de l'invention sont revendiquées dans les revendications 2 à 4.

Afin de bien faire comprendre l'invention, on va maintenant décrire, à titre d'exemples non limitatifs, en se référant aux figures jointes en annexe, plusieurs modes de réalisation d'une installation d'essuie-glace suivant l'invention.

La figure 1 est une vue en perspective d'un pare-brise de véhicule automobile équipé d'une installation d'essuie-glace suivant l'invention comportant une butée de soulèvement par essuie-glace.

La figure 2 est une vue en perspective d'un pare-brise de véhicule automobile équipé d'une installation d'essuie-glace comportant deux butées de soulèvement par essuie-glace.

La figure 3 est une vue en perspective d'une partie de l'installation d'essuie-glace visible sur la figure 2.

La figure 4 est une vue en coupe transversale analogue à la coupe suivant IV-IV de la figure 3, montrant une variante de réalisation du déflecteur d'air.

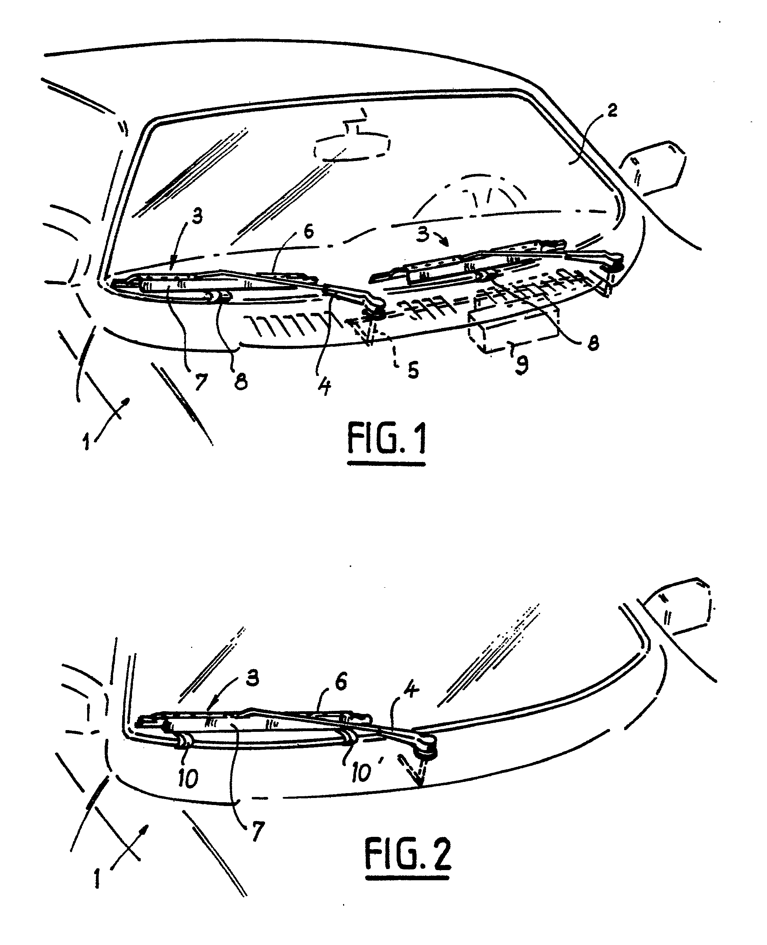

Sur la figure 1, on voit une partie 1 de la carrosserie d'un véhicule automobile et du pare-brise 2 de ce véhicule. Deux essuie-glaces désignés de manière générale par le repère 3 permettent de balayer la surface extérieure du pare-brise 2. Chacun des essuie-glaces 3 comporte un bras 4 articulé grâce à un pivot 5 sur la carrosserie du véhicule et un balai 6 muni d'un déflecteur d'air 7. Le pivot 5 du bras 4 est relié par un ensemble articulé à un moyen de motorisation 9 solidaire de la carrosserie 1 du véhicule. L'ensemble de motorisation 9 est commandé par le conducteur du véhicule, depuis le poste de conduite, soit pour mettre en marche les essuie-glaces 3 qui balayent alors le pare-brise suivant un secteur correspondant à un angle de rotation du bras 4 dans un sens et dans l'autre, soit pour arrêter les essuie-glaces 3 ou les mettre en position de garage comme représenté sur la figure 1.

Cette position de garage est obtenue par un déplacement angulaire de l'essuie-glace vers le bord du pare-brise, au-delà de sa position d'arrêt normale.

Dans cette position de fin de course, le déflecteur 7 du balai 6 vient en contact avec une butée 8 portée par la carrosserie ou le bord du pare-brise.

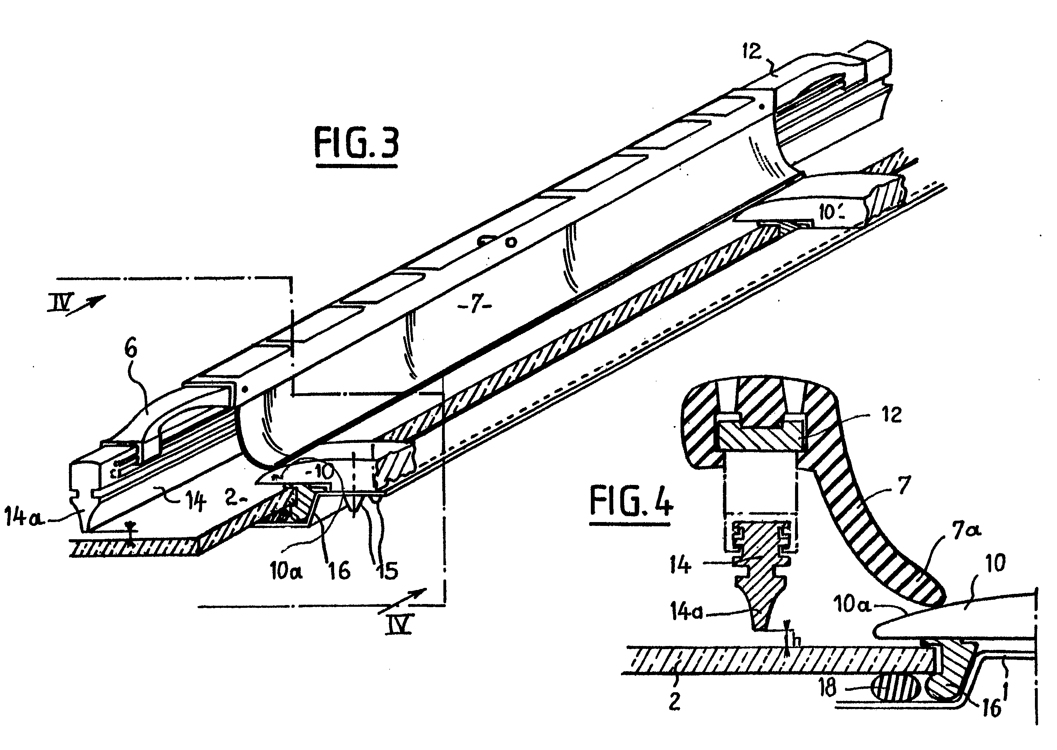

Sur la figure 2, on n'a représenté qu'un essuie-glace permettant de balayer le pare-brise 2 d'un véhicule, les éléments correspondants du véhicule et de l'installation d'essuie-glace sur les figures 1 et 2 portant les mêmes repères.

La différence entre les deux installations d'essuie-glace représentées aux figures 1 et 2 réside simplement dans l'utilisation de deux butées 10 et 10' pour venir en contact du déflecteur 7 de l'essuie-glace 3, au lieu de l'utilisation d'une seule butée 8 pour chacun des essuie-glaces 3, comme représenté sur la figure 1.

Sur la figure 3, on voit un balai d'essuie-glace 6 dans sa position de garage sur le bord du pare-brise 2 du véhicule correspondant. Le balai 6 comporte une armature constituée d'au moins un étrier 12 portant une raclette souple 14 en caoutchouc de forme profilée et comportant une lèvre inférieure 14a amincie par rapport au corps de la raclette 14 et destinée à venir en contact de frottement avec la surface extérieure du pare-brise 2.

Un déflecteur d'air 7, en acier ou en matière plastique, est fixé par engagement à force sur la partie supérieure de l'étrier 12. Le déflecteur 7 comporte, comme visible sur la figure 4, une section profilée dissymétrique dont une partie 7a, d'un côté du balai 6, à son extrémité au voisinage de la surface extérieure du pare-brise 2.

On voit sur les figures 3 et 4 que le déflecteur 7 vient en contact avec la butée 10 (ou 10') par l'intermédiaire de cette extrémité de la partie 7a du déflecteur 7.

Les butées 10 et 10' sont constituées sous la forme de patins en matière plastique comportant une partie d'attaque inclinée et arrondie 10a et des tétons de fixation venus de matière 15. Le patin 10 (ou 10') est fixé par clippage, les tétons 15 étant engagés à force dans des trous prévus dans une partie de la carrosserie 1 adjacente au bord 16 du pare-brise 2. L'extrémité du patin 10 comportant la rampe d'attaque 10a vient en contact avec l'enjoliveur de bas de pare-brise 16 constituant le bord inférieur de ce pare-brise.

L'extrémité du patin 10 comportant la rampe d'attaque 10a est légèrement débordante par rapport au bord du pare-brise et se trouve fixée à l'opposé du joint d'étanchéité 18 du pare-brise.

Lorsque l'essuie-glace est mis en position de garage, le balai 6 se déplaçant au-delà de sa position d'arrêt normal vers le bord inférieur du pare-brise 2, l'extrémité inférieure de la partie 7a du déflecteur d'air 7 vient en contact avec la surface d'attaque inclinée 10a du patin 10 (et avec la surface correspondante du patin 10'). Le déplacement du balai sur un petit angle avant son arrêt en position de garage produit alors un soulèvement h de la raclette 14, par coopération du déflecteur d'air 7 et du patin 10.

La raclette 14 n'est donc plus en contact avec la surface du pare-brise 2, dans la position de garage de l'essuie-glace. Cette raclette 14 ne subit donc plus la force de pression de l'essuie-glace provoquant sa déformation.

Ce résultat est obtenu en utilisant des butées constituées par des patins de très faible hauteur situés sur le bord du pare-brise et qui sont donc très peu saillants par rapport à la carrosserie et peu visibles sur le véhicule. Ce résultat est obtenu grâce à la coopération avec ces patins d'une partie du déflecteur d'air qui est dans une position proche de la surface extérieure du pare-brise.

L'installation d'essuie-glace selon l'invention permet donc de remédier aux inconvénients des dispositifs selon l'art antérieur d'une façon très simple dans le cas d'un essuie-glace équipé d'un déflecteur d'air.

L'invention ne se limite pas au mode de réalisation qui a été décrit.

On peut envisager l'utilisation d'un nombre quelconque de butées associées à chacun des essuie-glaces du véhicule ; la forme et la dimension de ces butées dépendent de la forme et de la disposition du déflecteur d'air sur l'essuie-glace ; ces butées ou patins peuvent être réalisés en un matériau quelconque ; de préférence, cependant, on utilisera une matière plastique pour leur fabrication ; ces butées seront fixées sur la carrosserie ou sur le pare-brise par vissage, par clippage, par collage, par sertissage ou de toute autre manière convenable.

Enfin, l'installation d'essuie-glace suivant l'invention peut être utilisée sur tout type de véhicule.

**Revendications**

1.- Installation d'essuie-glace pour véhicule automobile comportant un bras (4) articulé sur la carrosserie (1) du véhicule, un balai (3) fixé sur le bras (4) et muni d'une raclette souple (14) destinée à balayer la surface du pare-brise (2) du véhicule et un moyen de motorisation (9) du bras (4) commandé de façon à faire effectuer un balayage du pare-brise (2) par la raclette (14) avec un certain angle de rotation du bras (4) et à déplacer le balai au-delà d'une des positions extrêmes de balayage pour le mettre dans une position de garage, le balai (3) comportant de plus un dispositif déflecteur d'air (7), dans son prolongement latéral, au moins sur un côté, présentant une section profilée dont une partie (7a) au moins est proche de la surface du pare-brise (2), caractérisée par le fait qu'elle comporte en outre au moins une butée (8, 10, 10') fixée sur le bord du pare-brise (2), légèrement saillante par rapport à sa surface et dans une position correspondant à la position de garage du déflecteur d'air (7), de façon à soulever le balai (3) au-dessus de la surface du pare-brise, juste avant son arrêt en position de garage, par coopération du déflecteur (7) et de la butée (8, 10, 10').

2.- Installation d'essuie-glace suivant la revendication 1, caractérisée par le fait que deux butées (10, 10') sont associées au balai d'essuie-glace (3).

3.- Installation d'essuie-glace suivant l'une quelconque des revendications 1 et 2, caractérisée par le fait que la ou les butées (8, 10, 10') est (sont) constituée(s) par des patins comportant une surface d'attaque (10a) inclinée et est (sont) disposée(s) sur le bord du pare-brise (2) de façon que la surface inclinée (10a) soit dirigée vers la surface du pare-brise (2) au-dessus de laquelle se déplace la partie (7a) du déflecteur (7).

4.- Installation d'essuie-glace suivant la revendication 3, caractérisée par le fait que les patins (10, 10') sont réalisés en matière plastique et comportent des tétons (15) venus de matière destinés à être engagés en force dans des trous ménagés sur la carrosserie (1) du véhicule, pour la fixation des patins (10, 10').

## Patentansprüche

1. Scheibenwischereinrichtung für Kraftfahrzeuge mit einem Arm (4), welcher auf einer Karosserie (1) des Fahrzeugs drehbar ist, einem Wischer (3), der an dem Arm (4) befestigt ist und mit einem Wischerblatt (14) versehen ist, welches dazu bestimmt ist die Oberfläche der Windschutzscheibe (3) des Fahrzeugs zu wischen und einer Antriebseinrichtung (9) des Arms (4), die derart betätigt wird, um ein Wischen der Windschutzscheibe (2) durch das Wischerblatt (14) mit einem bestimmten Drehwinkel des Arms (4) auszuführen und den Wischer über eine der Wischendpositionen zu versetzen, um ihn in eine Ruhestellung zu bringen, wobei der Wischer (3) weiterhin eine Luftabweiservorrichtung (7) in seiner seitlichen Verlängerung auf wenigstens einer Seite aufweist, die einen profilierten Querschnitt aufweist, von dem ein Bereich (7a) wenigstens in der Nähe der Oberfläche der Windschutzscheibe (2) liegt, dadurch gekennzeichnet, daß sie weiterhin wenigstens einen Anschlag (8, 10, 10') aufweist, der am Rand der Windschutzscheibe (2) leicht vorspringend bezüglich ihrer Oberfläche und in einer Stellung befestigt ist, die der Ruhestellung des Luftabweisers (7) entspricht, derart, um den Wischer (3) über die Oberfläche der Windschutzscheibe genau vor seinem Halt in der Ruhestellung durch Zusammenwirkung des Abweisers (7) und des Anschlags (8, 10, 10') anzuheben.

2. Scheibenwischereinrichtung nach Anspruch 1, dadurch gekennzeichnet, daß zwei Anschläge (10, 10') dem Scheibenwischer (3) zugeordnet sind.

3. Scheibenwischereinrichtung nach einem der Ansprüche 1 oder 2, dadurch gekennzeichnet, daß der oder die Anschläge (8, 10, 10') durch Kufen gebildet ist (sind), die eine geneigte Angriffsoberfläche (10a) aufweisen und am Rande der Windschutzscheibe (2) angeordnet ist (sind), derart, daß die geneigte Oberfläche (10a) auf die Oberfläche der Windschutzscheibe (2) gerichtet ist, über der sich der Bereich (7a) des Abweisers (7) bewegt.

4. Scheibenwischereinrichtung nach Anspruch 3, dadurch gekennzeichnet, daß die Kufen (10, 10') aus Kunststoffmaterial gebildet sind und Vorsprünge (15) aus demselben Material aufweisen, die dazu bestimmt sind unter Kraft mit Öffnungen in Eingriff zu stehen, die auf der Karosserie (1) des Fahrzeugs für das Festlegen der Kufen (10, 10') ausgebildet sind.

## Claims

1. Windscreen wiper installation for a motor car having an arm (4) articulated to the vehicle body (1), a blade (3) fixed to arm (4) and provided with a flexible scraper (14) for sweeping the surface of the vehicle windscreen (2) and a motorization means (9) for the arm (4) controlled in such a way that the scraper (14) performs a sweep of the windscreen (2) with a certain rotation angle of arm (4) and displaces the blade beyond one of the extreme sweep positions in order to bring it in a garage position, the blade (3) also having an air deflector means (7) in its lateral extension, at least on one side, having a profiled section and whereof at least part (7a) is close to the surface of the windscreen (2), characterized in that it also has at least one abutment (8, 10, 10') fixed to the edge of the windscreen (2) and projecting slightly with respect to its surface in a position corresponding to the garage position of the air deflector (7), so as to raise the blade (3) above the surface of the windscreen just prior to its stoppage in the garage position by cooperation between deflector (7) and abutment (8, 10, 10').

2. Windscreen wiper installation according to claim 1, characterized in that two abutments (10, 10') awe associated with the indscreen wiper blade (3).

3. Windscreen wiper installation according to either of the claims 1 and 2, characterized in that the abutment or abutments (8, 10, 10') are constituted by pads having an inclined leading surface (10a) and which are located on the edge of the windscreen (2), in such a way that the inclined surface (10a) is directed towards the surface of the windscreen (2) above which travels parts (7a) of deflector (7).

4. Windscreen wiper installation according to claim 3, characterized in that the pads (10, 10') are made from a plastics material and have pins (15) made from said material and which are to be engaged by force in holes made on the vehicle body (1) for the fixing of said pads 10, 10').

FIG. 1

FIG. 2

# FIG.3

6

IV

-7-

12

10

14a

14  2-

10a  16  15

IV

# FIG.4

12

7

7a

14

14a

10a

10

2

18

16

EP 0 253 696 B1